Europäisches Patentamt

European Patent Office

Office européen des brevets

(19)

(11) Numéro de publication: **0 174 886**
**B1**

(12) FASCICULE DE BREVET EUROPEEN

(45) Date de publication du fascicule du brevet:
28.12.88

(51) Int. Cl.⁴: **F 02 K 9/97**, F 02 K 1/82

(21) Numéro de dépôt: **85401601.1**

(22) Date de dépôt: **06.08.85**

(54) Dispositif de protection thermique résistant à l'ablation et aux vibrations, et un procédé de fabrication.

(30) Priorité: **14.08.84 FR 8412782**

(43) Date de publication de la demande:
**19.03.86 Bulletin 86/12**

(45) Mention de la délivrance du brevet:
**28.12.88 Bulletin 88/52**

(84) Etats contractants désignés:
**AT BE CH DE GB IT LI NL SE**

(56) Documents cités:
**CH-A- 429 466**
**CH-A- 480 615**
**FR-A- 1 359 967**
**FR-A- 1 360 411**
**FR-A- 2 538 507**
**US-A- 3 140 968**
**US-A- 3 187 503**
**US-A- 3 200 750**
**US-A- 3 311 013**
**US-A- 3 573 123**
**US-A- 3 577 294**
**US-A- 3 933 310**
**US-A- 4 426 038**

(73) Titulaire: **AEROSPATIALE SOCIETE NATIONALE INDUSTRIELLE, 37, Boulevard de Montmorency, F-75781 Paris Cédex 16 (FR)**

(72) Inventeur: **Ferrier, Christiane, 6bis, rue Jean Jaurès, F-91430 Igny (FR)**

(74) Mandataire: **Rinuy, Santarelli, 14, avenue de la Grande Armée, F-75017 Paris (FR)**

## Description

La présente invention intéresse en général la protection thermique de parois en présence d'un écoulement ablatif.

Plus particulièrement, l'invention concerne la mise au point d'un dispositif de protection thermique interne et d'un procédé de fabrication de celui-ci, destiné à des structures creuses soumises à un écoulement ablatif de gaz corrosifs à grande vitesse et haute température et à des vibrations de niveau élevé en particulier inhérentes au fonctionnement. Dans le cas le plus fréquent, les structures creuses sont ouvertes à leurs extrémités et sont couramment désignées par «conduits».

Dans l'état actuel de la technique, les couches de protection thermique de telles structures sont constituées de composites à liants, organiques, organo-métalliques ou minéraux, capables d'inclure des renforts du type poudres, fibres, tissus organiques ou minéraux. Sous l'action des gaz chauds, le matériau ablatable subit le phénomène de pyrolyse. La pyrolyse s'accompagne d'une dégradation de la chaîne carbonée ou organo-silicique du liant qui rend la scorie fragile et cassante dans la masse. Pour pallier cette fragilisation, la couche de protection thermique est couramment armée, suivant des techniques diverses.

Il est en effet connu que, pour un matériau ablatable de ce type, soumis à l'érosion des gaz chauds et aux vibrations, l'ablation est réduite si le matériau est armé. L'armature noyée dans le matériau isolant peut être métallique ou non, tissée ou fibreuse. L'ablation est d'autant plus faible que le renfort fibreux ou tissé est ancré et orienté dans la matrice perpendiculairement au sens des gaz, tandis que le transfert thermique est d'autant plus faible que le renfort est orienté dans le sens des gaz.

Les armatures sont le plus souvent métalliques et fixées solidement par soudure sur les parois d'une chambre métallique, conformément par exemple au procédé décrit dans «Aviation Week Space Technology» du 27.4.1981 p. 176 qui fait appel à des treillis métalliques à tissage complexe. Les renforts ou armatures peuvent être des grillages divers renforcés de fibres réfractaires, des nids d'abeille, des matériels de type fibreux, conformément notamment aux procédés décrits dans les brevets FR 2 506 901, U.S. 3 617 416 ou U.S. 3 694 284.

Pour être efficaces, les mailles nécessitent des moyens complexes de remplissage, en liant chargé par exemple, par une centrifugation telle que décrite dans l'article précité. En outre, les armatures d'acier s'avèrent ne pas bien résister aux températures extrêmes, tandis que l'utilisation d'armatures maillées non métalliques nécessite la mise en place par collage sur la structure.

D'autres techniques utilisent des matériaux obtenus à partir de pré-formes en fibres réfractaires tissées dans trois directions.

Dans les procédés connus, l'ancrage de la substance isolante polymérisée est assuré par des renforts mobilisant ladite substance, lesdits renforts étant fixés sur la paroi à protéger.

Tous les procédés connus conduisent à une réalisation complexe et à une mise en place laborieuse.

Outre les complexités de réalisation, l'inconvénient majeur des dispositifs de protection thermique actuellement connus est que la substance isolante polymérisée nue est directement soumise au jet ablatif.

La présente invention a pour objet de pallier ces multiples inconvénients, en réduisant notamment la vulnérabilité des couches superficielles du dispositif de protection thermique qui sont en contact direct avec le jet ablatif. Elle a également pour objet un procédé de fabrication d'un tel dispositif amélioré qui soit aisé à mettre en œuvre.

L'invention propose ainsi un dispositif de protection thermique destiné à la protection de paroi d'une structure creuse à section évolutive monotone soumise à un écoulement ablatif à haute température en présence de vibrations, du type formé d'une couche de résine polymérisée isolante fixée à la surface de la paroi à protéger et contenant une armature, caractérisé en ce que ladite armature est un maillage frangé comportant une partie maillée soumise à l'écoulement ablatif et des franges dirigées avec une inclinaison prédéterminée par rapport au sens dudit écoulement, vers la surface de la paroi à protéger, et en contact avec celle-ci.

L'armature d'un dispositif selon l'invention comporte ainsi un maillage, généralement bouclé, en contact avec l'écoulement ablatif, muni de franges constituant des renforts mobilisant le liant isolant thermiquement.

En pratique, le maillage est avantageusement choisi en sorte de résister pendant plusieurs dizaines de secondes à une température pouvant aller jusqu'à 2000 °C, en présence de vibration dont la fréquence peut aller de 1000 à 2500 Hz environ. La partie maillée du maillage frangé est, de préférence, un réseau à trois dimensions, et elle est formée en un matériau de préférence thermiquement isolant et/ou réfractaire, adapté à être filé ou tissé. Il peut s'agir notamment de coton, de kevlar, de fibres silico-alumineuses, de carbone ou de carbure de silicium. Quant au liant, il s'agit en pratique d'une résine thermodurcissable à caractère thermostable rigidimère (telles une résine organique, phénolique, furannique, polyimide ou polystyrilpyridine (PSD), d'une résine semi-organique (silicone par exemple), d'une résine minérale (silicates par exemple) ou d'une résine à caractère élastomère (silicone par exemple).

Selon un mode de réalisation préféré, dans le cas de la protection interne de conduits creux, le maillage frangé est constitué d'un ruban frangé en hélice.

Dans ce dernier cas, l'invention propose en outre un procédé de fabrication d'un dispositif de protection thermique destiné à être fixé à la surface interne de conduits creux, caractérisé en ce que l'on fait défiler un ruban frangé dans une résine d'imprégnation, qu'on bobine ce ruban sur un mandrin en sorte que le maillage soit en contact avec ce mandrin, on oriente les franges suivant une inclinaison donnée par rapport à l'axe du mandrin telle que, après fixation du dispositif de protection thermique à la surface interne d'un conduit creux, ces franges soient dirigées vers la paroi à protéger avec une inclinaison prédéterminée par rapport au sens de l'écoulement dans le conduit creux, on met en forme sous pression le ruban imprégné bobiné et on polymérise la résine d'imprégantion.

L'invention préconise que la polymérisation de la résine ait lieu après engagement du ruban imprégné dans une structure à protéger, généralement après un formage préalable sous pression. En variante, la polymérisation a lieu dans un endroit quelconque en sorte de fournir un dispositif de protection interne stockable prêt à l'emploi.

D'autres objets, caractéristiques et avantages de l'invention ressortent de la description qui suit, donnée à titre d'exemple non limitatif, en regard des dessins annexés sur lesquels:

— la figure 1 est une vue schématique en perspective d'une installation de fabrication par bobinage d'un dispositif de protection thermique selon l'invention; et,

— les figures 2 à 6 sont des vues en coupe de divers maillages frangés utilisables selon l'invention.

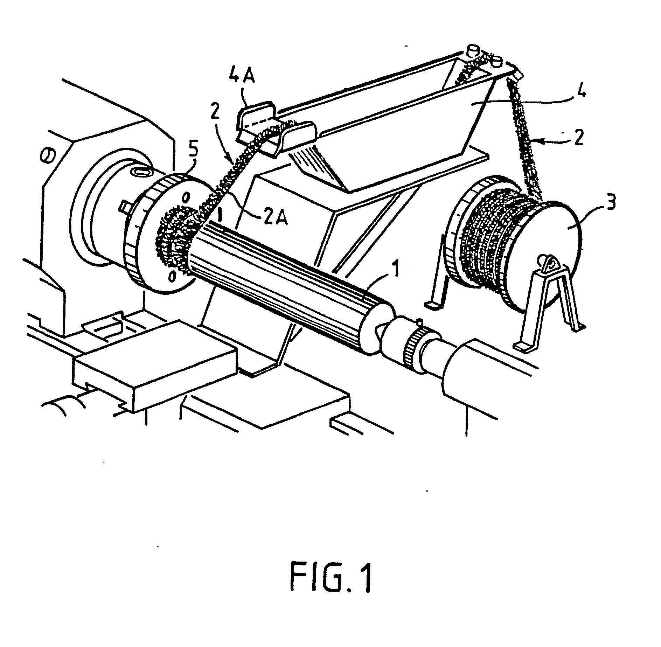

La figure 1 illustre en partie un exemple de fabrication d'un dispositif de protection thermique destiné à protéger la paroi interne d'un conduit destiné à canaliser un écoulement ablatif.

Le procédé donné à titre d'exemple consiste à bobiner autour d'un mandrin 1 approprié, un maillage ou textile frangé 2 d'un type aisément fourni par un atelier de tissage. Ledit textile frangé tel que tresse, galon ou ruban frangé présente une partie maillée indéformable 2A comportant des mailles de petites dimensions, et des franges ou fibres 2B.

La fabrication du dispositif de protection thermique interne proposée à titre d'exemple a lieu en deux étapes:

— dans un premier temps on prépare une ébauche brute imprégnée sur mandrin; et,

— dans un deuxième temps, on élabore le dispositif de protection thermique proprement dit.

La préparation de l'ébauche, illustrée à la figure 1, consiste à:

— dévider un galon frangé 2 stocké sur un dévidoir 3;

— l'imprégner de résine dans un bac 4 approprié;

— le guider en 4A pendant le bobinage sur le mandrin 1 de telle manière que ses franges soient orientées à l'opposé de la surface du mandrin à protéger selon une inclinaison axiale déterminée par rapport au sens de l'écoulement ablatif, définie en fonction des caractéristiques de ce dernier;

— le maintenir dans cet état pendant le moulage de la résine (par des moyens non représentés); et,

— disperser à l'aide d'un peigne (non représenté) lesdites franges imprégnées de résine en sorte d'obtenir un ensemble: mandrin et bobinage imprégné.

Pour la réalisation finale du dispositif de protection thermique, deux procédés sont décrits ci-après:

— selon une première variante du procédé, l'ensemble «mandrin et bobinage imprégné» est:

— introduit dans le conduit à protéger thermiquement,

— mis en forme sous pression, puis,

— polymérisé in situ,

ce qui aboutit à l'obtention directe d'un conduit protégé thermiquement;

— selon une deuxième variante du procédé, l'ensemble «mandrin et bobinage imprégné» est:

— introduit dans un moule,

— préformé sous pression,

— polymérisé dans ledit moule, puis

— démoulé,

ce qui aboutit à l'obtention d'un dispositif de protection thermique indépendant et directement utilisable dans les conduits creux adaptés, après fixation selon une technique quelconque.

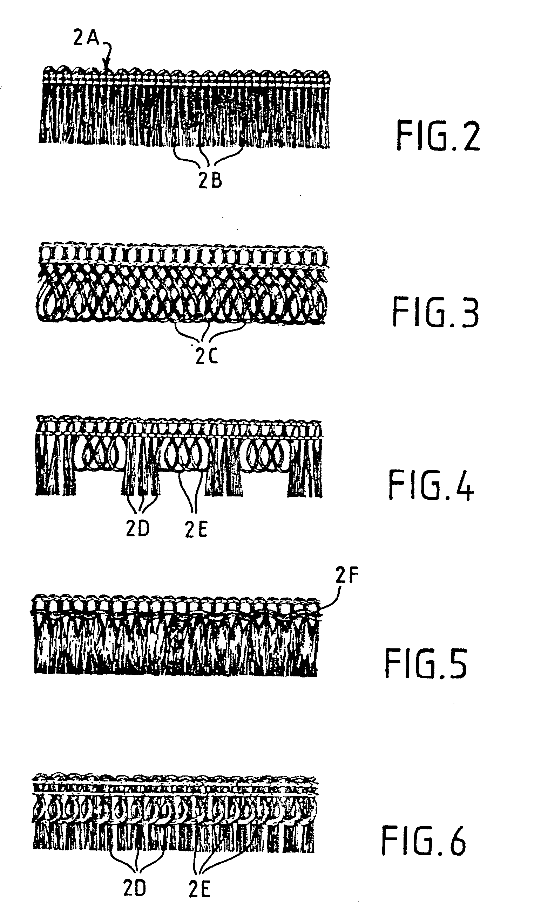

Suivant une réalisation particulière ayant permis d'éprouver le matériel obtenu, des galons frangés de profils similaires à ceux représentés en figure 2, 3, 4, 5 ou 6 tels que peuvent en fournir les Manufactures Réunies de Saint-Chamond ont été bobinés sur un mandrin cylindrique de diamètre de 214 mm, de longueur de 200 mm. Ces galons frangés par exemple élaborés en carbone à précurseur PAN, comportent un multiple fractionnaire ou entier de 3000 filaments (n = 1/3, 1, 2, 3, ou 6) par brin de frange.

Pour une couche d'ablation de 8 mm d'épaisseur, une épaisseur de 19 mm a été choisie pour les galons frangés.

L'imprégnation a été réalisée par passage dans un bain de silicone chargé en silice et en carbure de silicium (par exemple du type RTV 630 GE ou équivalent, avec 18% de carbure de silicium). Après trempage, le taux de liant a été régulé par passage forcé du galon imprégné dans une fente de 4 mm calibrée.

L'angle d'inclinaison des fibres dudit galon sur la génératrice du mandrin a été donné par le chanfrein du flasque de départ de bobinage 5 et dans le cas présent a été choisi égal à 45°.

Le pas du bobinage a été de 2 mm, avec une vitesse de rotation du mandrin de 2 tours/minute.

Le mandrin, muni du galon frangé imprégné et ainsi bobiné a ensuite été mis dans un moule cylindrique de diamètre intérieur de 230 mm. La couche d'ablation a été formée par pressage au moyen d'un poinçon dont la surface de pressage était parallèle à la surface du chanfrein du flasque de départ. La pression appliquée a été de 50 bars. La couche a ensuite été polymérisée par chauffage à 60° pendant au moins 4 heures.

Après polymérisation, on a obtenu une couronne cylindrique souple de 160 mm de long.

La composition de la couche de protection était telle que le renfort frangé constituait de 15 à 18% pondéraux du matériau.

Selon le procédé décrit ci-dessus, divers échantillons destinés à des épreuves ont été réalisées à l'aide de couronnes cylindriques tapissant leur paroi interne. Des échantillons ont été réalisés en utilisant:
— des couches d'ablation avec des galons frangés à liage polyester ou kevlar;
— des couches d'ablation dans lesquelles un liage polyester fixe également une mèche carbone;
— des couches de renfort contenant 18 000 ou 6000 filaments par brin.

Les échantillons ont été soumis à des épreuves dans une chambre de combustion de statoréacteur, à une température supérieure à 2000 °C et aux vibrations haute fréquence (1300 Hz) qui accompagnent la combustion. La durée d'une épreuve a été de plusieurs dizaines de secondes.

On a pu vérifier l'efficacité du maillage 2A du galon frangé et de son ancrage par fibres 2B dispersées.

Lors de ces essais, la température sur la paroi externe de la chambre d'essai n'atteignait guère que 90 °C, 25 secondes après arrêt de la combustion.

Un renfort frangé à taux de carbone réduit a été réalisé selon une variante du procédé, explicitée ci-après. Dans le cadre du mode opératoire selon l'invention, le galon frangé a été choisi appauvri en fibres élémentaires (1000 à 3000 filaments par brin). Entre chaque spire de renfort frangé, a été introduite une composition silicone chargée de zircone ou carbure de silicium et de fibres courtes (5 mm) de carbone ou silice ou carbure de silicium. La composition de l'ajout a été: RTV 630 76%; carbone en fibre de 5 mm 6%; SiC 18%.

Selon cette réalisation, le taux de renfort orienté de la protection thermique obtenue a été abaissé à 8 à 11% en poids.

Avec des échantillons d'un dispositif de protection thermique adoptant un tel taux de carbone, la température de paroi froide, mesurée après épreuve, a été trouvée inférieure à 65 °C.

Une couche contenant de 8 à 11% de renfort frangé de profil similaire à celui de la figure 4, a protégé avec efficacité une chambre de combustion pendant plusieurs minutes sans que la température de la structure métallique de la chambre ne dépasse 400°.

Selon une autre variante de réalisation, l'adoption d'une couche d'ablation armée de galons frangés obtenue à partir de carbure de silicium et élaborée à partir de mèches contenant 500 filaments a permis une réduction sensible de la conductibilité thermique de la protection pendant la durée de l'utilisation.

Selon une autre variante, l'utilisation de fibres en silice a de même permis de diminuer la conductibilité du dispositif protecteur.

Selon une autre variante, le dispositif protecteur a été réalisé en un matériau rigidimère à très hautes caractéristiques thermiques obtenu par l'adoption pour l'imprégnation du galon frangé d'une résine thermodurcissable et thermodure, telle qu'une résine phénolique.

Selon une variante plus élaborée du procédé précité de fabrication, une autre définition du dispositif protecteur a fait appel à l'utilisation d'un galon frangé comportant dans son liage une mèche de carbone telle que représentée par la figure 5, associée à l'adoption d'une procédure comportant, d'une part, un bobinage hélicoïdal non jointif avec, d'autre part, après élimination des solvants, un moulage sous une pression de 20 à 40 MPa. Le dispositif protecteur ainsi réalisé se présentait sous forme d'un tube rigide à tenue mécanique renforcée.

Les figures 2 à 6 illustrent en coupe des exemples de maillages frangés utilisables dans un dispositif de protection thermique selon l'invention. La figure 2 représente des brins libres 2B solidarisés par des ligatures ou liages formant la partie maillée 2A. Dans la figure 3, les franges sont constituées par des brins bouclés 2C. Les franges de la figure 4 comportent en alternance des brins libres 2D et des brins bouclés 2E formant conjointement des créneaux.

Le maillage frangé de la figure 5 comprend des brins libres 2B analogues à ceux de la figure 2, et une mèche transversale 2F prise dans le liage 2A.

Enfin, la figure 6 représente des brins libres 2D et bouclés 2E superposés.

Il va de soi que la description qui précède n'a été proposée qu'à titre indicatif et que de nombreuses variantes peuvent être proposées par l'homme de l'art sans sortir du cadre de l'invention.

Ainsi, par exemple, le maillage frangé, au lieu d'être un ruban enroulé en hélice, dans le cas de la protection interne d'un conduit peut être un panneau tissé frangé souple, recourbé en sorte d'envelopper le mandrin 1.

Par ailleurs le pourcentage en poids de l'armature par rapport au dispositif de protection thermique peut être, pour chaque type déterminé de maillage frangé, à une valeur choisie entre 5 et 80%; la proportion du maillage par rapport audit dispositif est en pratique définie à 2% près.

De façon très générale l'invention s'applique à la protection de structures creuses à section évolutive monotone au moyen de liant (généralement une résine polymérisée isolante contenant une armature).

## Revendications

1. Dispositif de protection thermique destiné à la protection de paroi d'une structure creuse à section évolutive monotone soumise à un écoulement ablatif à haute température en présence de vibrations, du type formé d'une couche de résine polymérisée isolante fixée a la surface de la paroi à protéger et contenant une armature, caractérisé en ce que ladite armature (2) est un maillage frangé comportant une partie maillée (2A) soumise à l'écoulement ablatif et des franges (2B–2F) dirigées avec une inclinaison prédéterminée par rapport au sens dudit écoulement, vers la surface de la paroi à protéger, et en contact avec celle-ci.

2. Dispositif selon la revendication 1, caractérisé en ce que la partie maillée forme un réseau à trois dimensions sensiblement indéformable.

3. Dispositif selon la revendication 1 ou la revendication 2 caractérisé en ce que le pourcentage en poids de l'armature par rapport audit dispositif est pour chaque type déterminé de maillage frangé à une valeur choisie entre 5 et 80%, la proportion du maillage par rapport audit dispositif étant définie à 2% près.

4. Dispositif selon l'une quelconque des revendication 1 à 3, caractérisé en ce que la partie maillée est adaptée à résister à une température de 2000 °C pendant plusieurs dizaines de secondes.

5. Dispositif selon l'une quelconque des revendications 1 à 4, caractérisé en ce que la partie maillée imprégnée et polymérisée est adaptée à résister, pendant plusieurs dizaines de secondes, à des vibrations à fréquence de l'ordre de 1000 à 2500 Hz.

6. Dispositif selon l'une quelconque des revendications 1 à 5, caractérisé en ce que le maillage frangé est formé au moins partiellement d'une matière tissable réfractaire.

7. Dispositif selon l'une quelconque des revendications 1 à 6, caractérisé en ce que le maillage frangé est formé au moins partiellement d'une matière tissable isolante thermiquement.

8. Dispositif selon la revendication 1, caractérisé en ce que le maillage frangé contient au moins une matière appartenant au groupe constitué par le carbone, la silice, le carbure de silicium, le verre, le kevlar, la silico-alumine.

9. Dispositif selon l'une quelconque des revendications 1 à 8, caractérisé en ce que le liant (4) est une résine thermodurcissable à caractère thermostable rigidimère, telle qu'une résine organique, phénolique, furannique, polyimide ou polystyrilpyridine.

10. Dispositif selon l'une quelconque des revendications 1 à 8, caractérisé en ce que le liant (4) est une résine semi-organique telle qu'une silicone.

11. Dispositif selon l'une quelconque des revendications 1 à 8, caractérisé en ce que le liant (4) est une résine minérale telle qu'un silicate.

12. Dispositif selon l'une quelconque des revendications 1 à 8, caractérisé en ce que le liant (4) est une résine à caractère élastomère telle qu'une silicone.

13. Dispositif selon l'une quelconque des revendications 1 à 12 adapté à la protection interne d'une strucutre creuse, caractérisé en ce que l'armature est un ruban frangé enroulé en hélice.

14. Procédé de fabrication d'un dispositif de protection thermique destiné à être fixé à la surface interne de conduits creux selon la revendication 13, caractérisé en ce que l'on fait défiler un ruban frangé dans une résine d'imprégnation (4), qu'on bobine ce ruban sur un mandrin (1) en sorte que le maillage soit en contact avec ce mandrin, on oriente les franges suivant une inclinaison donnée par rapport à l'axe du mandrin telle que, après fixation du dispositif de protection thermique à la surface interne d'un conduit creux, ces franges soient dirigées vers la paroi à protéger avec une inclinaison prédéterminée par rapport au sens de l'écoulement dans le conduit creux, on met en forme sous pression le ruban imprégné bobiné et on polymérise la résine d'imprégnation.

15. Procédé selon la revendication 14, caractérisé en ce que la résine d'imprégnation est polymérisée in situ après engagement du ruban imprégné bobiné dans un conduit à protéger.

## Patentansprüche

1. Wärmeschutzeinrichtung zum Schutz der Wand eines hohlen Körpers mit einem gleichförmigen erweiterbaren Querschnitt, der einer ablativen Strömung hoher Temperatur in Anwesenheit von Vibrationen unterworfen ist, von der Art mit einer isolierenden Schicht aus polymerisiertem Harz, die an der Oberfläche der zu schützenden Wand befestigt ist und eine Armierung enthält, dadurch gekennzeichnet, dass die genannte Armierung (2) ein mit Fransen versehenes Netzwerk ist, das einen mit Maschen versehenen Teil (2A), der der ablativen Strömung unterworfen ist, und Fransen (2B–2F) aufweist, die mit einer vorherbestimmten Neigung in bezug auf die Richtung der genannten Strömung gegen die Oberfläche der zu schützenden Wand gerichtet sind und mit dieser in Kontakt stehen.

2. Einrichtung nach Anspruch 1, dadurch gekennzeichnet, dass der mit Maschen versehene Teil ein dreidimensionales, im wesentlichen unverformbares Netzwerk bildet.

3. Einrichtung nach Anspruch 1 oder 2, dadurch gekennzeichnet, dass der Gewichts-Prozentsatz der Armierung in bezug auf die Einrichtung für jeden Typ von Fransen-Netzwerk mit einem zwischen 5 und 80% liegenden Wert festgelegt ist, wobei das Verhältnis des Netzwerkes in bezug auf die Einrichtung mit nahe 2% bestimmt wird.

4. Einrichtung nach einem der Ansprüche 1 bis 3, dadurch gekennzeichnet, dass der mit Maschen versehene Teil eingerichtet ist, mehrere zehn Sekunden lang einer Temperatur von 2000 °C standzuhalten.

5. Einrichtung nach einem der Ansprüche 1 bis 4, dadurch gekennzeichnet, dass der mit Maschen versehene imprägnierte und polymerisierte Teil eingerichtet ist, mehrere zehn Sekunden lang Vibrationen mit einer Frequenz in der Grössenordnung von 1000 bis 2500 Hz standzuhalten.

6. Einrichtung nach einem der Ansprüche 1 bis 5, dadurch gekennzeichnet, dass das mit Fransen versehene Netzwerk zumindest teilweise aus einem webbaren feuerfesten Material besteht.

7. Einrichtung nach einem der Ansprüche 1 bis 6, dadurch gekennzeichnet, dass das mit Fransen versehene Netzwerk zumindest teilweise aus einem webbaren thermisch isolierenden Material besteht.

8. Einrichtung nach Anspruch 1, dadurch gekennzeichnet, dass das mit Fransen versehene Material mindestens ein Material aus der aus Kohlenstoff, Silizium, Siliziumkarbid, Glas, Kevlar und Tonerdesilikat bestehenden Gruppe enthält.

9. Einrichtung nach einem der Ansprüche 1 bis 8, dadurch gekennzeichnet, dass das Bindemittel (4) ein wärmehärtbares wärmebeständiges Monoplastharz, wie ein organisches Harz, ein Phenolharz, Furanharz, Polyimidharz oder Polystyrolpyridinharz, ist.

10. Einrichtung nach einem der Ansprüche 1 bis 8, dadurch gekennzeichnet, dass das Bindemittel (4) ein halb-organisches Harz, wie ein Silikon, ist.

11. Einrichtung nach einem der Ansprüche 1 bis 8, dadurch gekennzeichnet, dass das Bindemittel (4) ein mineralisches Harz, wie ein Silikat, ist.

12. Einrichtung nach einem der Ansprüche 1 bis 8, dadurch gekennzeichnet, dass das Bindemittel (4) ein elastomeres Harz, wie ein Silikon, ist.

13. Einrichtung nach einem der Ansprüche 1 bis 12 zum Innenschutz eines Hohlkörpers, dadurch gekennzeichnet, dass die Armierung ein wendelförmig gewickeltes mit Fransen versehenes Band ist.

14. Verfahren zur Herstellung einer Wärmeschutzeinrichtung nach Anspruch 13 zur Befestigung an der inneren Oberfläche von hohlen Leitungen, dadurch gekennzeichnet, dass ein mit Fransen versehenes Band durch ein Imprägnierharz (4) geführt wird, dass dieses Band auf einen Dorn (1) so gewickelt wird, dass das Netzwerk in Kontakt mit dem Kern ist, dass die Fransen entsprechend einer gegebenen Neigung mit bezug auf die Achse des Kerns so ausgerichtet werden, dass die Fransen nach Befestigung der Wärmeschutzeinrichtung auf der inneren Oberfläche einer hohlen Leitung mit einer vorherbestimmten Neigung in bezug auf die Strömungsrichtung in der hohlen Leitung gegen die zu schützende Wand hin gerichtet sind, dass das gewickelte imprägnierte Band unter Druck geformt wird, und dass das Imprägnierharz polymerisiert wird.

15. Verfahren nach Anspruch 14, dadurch gekennzeichnet, dass das Imprägnierharz nach Einbringen des gewickelten imprägnierten Bandes in eine zu schützende Leitung in situ polymerisiert wird.

## Claims

1. A thermal protection device for protecting the wall of a hollow structure with a monotonic evolutive cross-section subjected to high temperature ablative flow in the presence of vibrations, of the type formed by a layer of insulating polymerized resin attached to the surface of the wall to be protected and containing an armature, characterized in that the said armature (2) is a fringed meshing comprising a meshed portion (2A) subjected to the said ablative flow and fringes (2B–2F) directed in a predetermined orientation relative to the direction of the said flow towards the structure of the wall to be protected and in contact with the latter.

2. A device according to claim 1, characterized in that the meshed portion forms a substantially undeformable three-dimensional network.

3. A device according to claim 1 or claim 2, characterized in that the percentage by weight of the armature relative to the said device, for each determined type of fringed meshing, is of a value selected between 5 and 80%, the proportion of meshing relative to the said device being defined within 2%.

4. A device according to any one of claims 1 to 3, characterized in that the fringed portion is adapted to resist a temperature of 2000 °C for several tens of seconds.

5. A device according to any one of claims 1 to 4, characterized in that the impregnated and polymerized fringed portion is adapted to resist for several tens of seconds vibrations having a frequency of the order of 1000 to 2500 Hz.

6. A device according to any one of claims 1 to 5, characterized in that the fringed portion is formed at least partly from a weavable refractory material.

7. A device according to any one of claims 1 to 6, characterized in that the fringed portion is formed at least partly from a thermally insulating weavable material.

8. A device according to claim 1, characterized in that the fringed portion contains at least one material selected from the group comprising carbon, silica, silicon carbide, glass, kevlar and silico-alumina.

9. A device according to any one of claims 1 to 8, characterized in that the binder (4) is a heat settable resin of a rigidimeric heat stable nature such as an organic, phenolic, furanic, polyimide or polystyrylpyridine resin.

10. A device according to any one of claims 1 to 8, characterized in that the binder (4) is a semi-organic resin such as a silicone.

11. A device according to any one of claims 1 to 8, characterized in that the binder (4) is a mineral resin such as a silicate.

12. A device according to any one of claims 1 to 8, characterized in that the binder (4) is a resin of elastomeric nature such as a silicone.

13. A device according to any one of claims 1 to 12 adapted for the internal protection of a hollow structure, characterized in that the armature is a helically wound fringed strip.

14. A method of manufacturing a thermal protection device intended to be attached to the internal surface of hollow conduits according to claim 13, characterized in that a fringed strip is moved through an impregnation resin (4), the strip is wound onto a mandrel (1) so that the meshing is in contact with the mandrel, the fringes are orientated at a given inclination relative to the mandrel axis so that, after attachment of the thermal protection device to the internal surface of the hollow conduit, these fringes are directed towards the wall to be protected with a predetermined inclination relative to the direction of flow in the hollow conduit, the wound impregnated strip is shaped under pressure and the impregnation resin is polymerized.

15. A method according to claim 14, characterized in that the impregnation resin is polymerized in situ after engaging the wound impregnated strip into a conduit to be protected.

1/2

FIG.1

2/2

FIG.2

FIG.3

FIG.4

FIG.5

FIG.6